# EUROPÄISCHE PATENTSCHRIFT

(11) **EP 4 282 708 B1**
(45) Veröffentlichungstag und Bekanntmachung des Hinweises auf die Patenterteilung: **25.09.2024**
(21) Anmeldenummer: 22175521.8
(22) Anmeldetag: 25.05.2022
(51) Int. Cl.: B60Q 1/068, B60Q 1/076, F16C 29/04

(54) **VERSTELLVORRICHTUNG FÜR EINEN KRAFTFAHRZEUGSCHEINWERFER**
ADJUSTMENT DEVICE FOR A MOTOR VEHICLE HEADLIGHT
DISPOSITIF DE RÉGLAGE POUR UN PHARE DE VÉHICULE AUTOMOBILE

(43) Veröffentlichungstag der Anmeldung: 29.11.2023
(73) Patentinhaber: ZKW Group GmbH, 3250 Wieselburg (AT)
(72) Erfinder: Höfler, Thomas, 3250 Wieselburg (AT); Pritzl, Leopold, 3254 Bergland (AT); Artner, Martin, 3672 Maria Taferl (AT); Petzold, Thomas, 85774 Unterföhring (AT)
(74) Vertreter: Patentanwaltskanzlei Matschnig & Forsthuber OG

(56) Entgegenhaltungen:
- EP-A1- 2 995 500
- DE-A1- 102014 007 865
- FR-A1- 3 052 537
- FR-A1- 3 105 353

## Beschreibung

Die Erfindung betrifft eine Verstellvorrichtung für einen Kraftfahrzeugscheinwerfer zum Verstellen von zumindest einer optisch relevanten Baueinheit des Kraftfahrzeugscheinwerfers, wobei die Verstellvorrichtung Folgendes umfasst:
- einen Basiskörper, welcher in Bezug auf die zumindest eine zu verstellende optisch relevante Baueinheit feststehend angeordnet ist,
- einen Gleitkörper, welcher verschiebbar entlang einer Verschubachse auf dem Basiskörper gelagert ist und eingerichtet ist, an der zumindest einen optisch relevanten Baueinheit anzugreifen,
- eine Antriebseinrichtung, welche in Bezug auf die zumindest eine zu verstellende optisch relevante Baueinheit feststehend angeordnet ist, vorzugsweise auf dem Basiskörper angeordnet ist, und eingerichtet ist, an dem Gleitkörper anzugreifen und entlang der Verschubachse zu verschieben, sodass bei einer Verschiebebewegung des Gleitkörpers durch die Antriebseinrichtung, die zumindest eine optisch relevante Baueinheit bewegt wird,

wobei der Gleitkörper mittels einer Führungseinrichtung an dem Basiskörper gelagert ist, wobei die Führungseinrichtung eingerichtet ist, den durch die Antriebseinrichtung angetriebenen Gleitkörper entlang der Verschubachse auf dem Basiskörper zu führen, wobei
die Führungseinrichtung zumindest ein Rolllager umfasst, wobei in dem zumindest einen Rolllager zumindest ein Rollkörper gelagert ist, wobei der zumindest eine Rollkörper derart in dem zumindest einen Rolllager gelagert ist, dass der zumindest eine Rollkörper bei der Verschiebebewegung des Gleitkörpers entlang der Verschubachse den Gleitkörper bei der Verschiebebewegung entlang der Verschubachse relativ zu dem feststehenden Basiskörper führt.

Weiter betrifft die Erfindung einen Kraftfahrzeugscheinwerfer umfassend zumindest eine erfindungsgemäße Verstellvorrichtung.

Bei Verstellvorrichtungen aus dem Stand der Technik werden Körper, welche gegeneinander verschiebbar ausgeführt sind, über Gleitflächen zueinander gelagert. Dadurch entstehen jedoch hohe Reibkräfte und Abrieb der Flächen über eine längere Lebensdauer.

Die durch Verschieben der Körper über Gleitflächen entstehenden Reibkräfte führen in Verbindung mit dem kraftabhängigen Spiel der Antriebseinrichtung, insbesondere Schrittmotoren, zu einer Hysterese im Verstellsystem.

Die DE 102014007865 A1 zeigt eine Verstellvorrichtung aus dem Stand der Technik.

Es ist eine Aufgabe der Erfindung eine verbesserte Verstellvorrichtung für einen Kraftfahrzeugscheinwerfer bereitzustellen.

Diese Aufgabe wird durch das Kennzeichen des unabhängigen Anspruchs 1 gelöst.

Erfindungsgemäß ist dabei vorgesehen, dass das zumindest eine Rolllager eine erste und eine zweite Lagerschale umfasst, wobei die erste Lagerschale an dem Basiskörper angeordnet ist und die zweite Lagerschale an dem Gleitkörper angeordnet ist,
wobei die erste und die zweite Lagerschale durch Zusammenführen der beiden Lagerschalen gemeinsam das zumindest eine Rolllager bilden,
und wobei der zumindest eine Rollkörper derart in dem zumindest einen Rolllager gelagert ist, dass der zumindest eine Rollkörper an der ersten und der zweiten Lagerschale anliegt, sodass bei der Verschiebebewegung des Gleitkörpers entlang der Verschubachse die zweite Lagerschale eine Rollbewegung des zumindest einen Rollkörpers bewirkt, wobei der zumindest eine Rollkörper durch die Rollbewegung die zweite Lagerschale bei der Verschiebebewegung entlang der Verschubachse relativ zu der feststehenden ersten Lagerschale führt.

Der Begriff "Zusammenführen" ist derart zu verstehen, dass durch Verschieben des Gleitkörpers in eine vorgegebene Position auf den Basiskörper die Lagerschalen derart zusammengeführt werden, dass die Lagerschalen gemeinsam das Rolllager bilden.

Es kann vorgesehen sein, dass das zumindest eine Rolllager sich entlang einer Geraden erstreckt, welche parallel zur Verschubachse ist.

Es kann vorgesehen sein, dass die erste und zweite Lagerschale jeweils zwei gegenüberliegende Anschläge entlang der Verschubachse aufweisen, wobei bei einem Maximalhub und einem Minimalhub der Verschiebebewegung des Gleitkörpers der zumindest eine Rollkörper an einem Anschlag der ersten Lagerschale und einem Anschlag der zweiten Lagerschale anschlägt.

Es kann vorgesehen sein, dass die Führungseinrichtung zumindest zwei Rolllager aufweist.

Es kann vorgesehen sein, dass die zumindest zwei Rolllager gegenüberliegend einer Achse quer zur Verschubachse angeordnet sind.

Es kann vorgesehen sein, dass die erste Lagerschale einstückig mit dem Basiskörper hergestellt ist und/oder die zweite Lagerschale einstückig mit dem Gleitkörper hergestellt ist.

Es kann vorgesehen sein, dass der zumindest eine Rollkörper rotationssymmetrisch um zumindest eine Achse ist, welche zumindest eine Achse orthogonal zur Verschubachse ist.

Es kann vorgesehen sein, dass der zumindest eine Rollkörper als Kugel, Zylinder und/oder Kegel ausgebildet ist.

Es kann vorgesehen sein, dass der zumindest eine Rollkörper aus Metall, vorzugsweise Stahl, oder aus Kunststoff hergestellt ist.

Es kann vorgesehen sein, dass die Verstellvorrichtung zumindest eine Stützeinrichtung zur Stützung des Gleitkörpers auf dem Basiskörper gegen eine Bewegung quer zur Verschubachse aufweist.

Es kann vorgesehen sein, dass die zumindest eine Stützeinrichtung als eine Feder-Nut-Verbindung zwischen dem Gleitkörper und dem Basiskörper ausgebildet ist, wobei sich die Feder-Nut-Verbindung entlang der Verschubachse erstreckt.

Es kann vorgesehen sein, dass die Nut auf dem Gleitkörper angeordnet ist, wobei die Feder auf dem Basiskörper angeordnet ist.

Es kann vorgesehen sein, dass der zumindest eine Rollkörper über eine Montageöffnung, welche an der ersten oder der zweiten Lagerschale angeordnet ist, in das Rolllager einsetzbar ist.

Es kann vorgesehen sein, dass die zweite Lagerschale des zumindest einen Rolllagers einen Verbindungsabschnitt aufweist, welcher derart elastisch ausgebildet ist, dass der zumindest eine Rollkörper, welcher in dem zumindest einen Rolllager angeordnet ist, durch eine Federkraft des Verbindungsabschnittes von der zweiten Lagerschale gegen die erste Lagerschale gedrückt wird.

Die Aufgabe wird ebenso gelöst durch einen Kraftfahrzeugscheinwerfer umfassend zumindest eine erfindungsgemäße Verstellvorrichtung.

Nachfolgend wird die Erfindung anhand von beispielhaften Zeichnungen näher erläutert. Hierbei zeigt
Fig. 1 eine perspektivische Ansicht einer beispielhaften Verstellvorrichtung für einen Kraftfahrzeugscheinwerfer, wobei die Verstellvorrrichtung einen auf einem Basiskörper angeordneten Gleitkörper umfasst, welcher relativ zum Basiskörper mittels Rolllager auf dem Basiskörper entlang einer Verschubachse verschiebbar ist,
Fig. 2 eine perspektivische Ansicht der Verstellvorrichtung aus Fig. 1, wobei der Gleitkörper nicht auf dem Basiskörper angeordnet dargestellt ist,
Fig. 3 eine Vorderansicht der Verstellvorrichtung aus Fig. 1 entlang der Verschubachse, wobei Rolllager zu sehen sind, welche jeweils eine erste und eine zweite Lagerschale aufweisen,
Fig. 4 eine Querschnittansicht eines exemplarischen Rolllagers der Verstellvorrichtung aus Fig. 1, wobei zwischen der ersten und zweiten Lagerschale ein Rollkörper, in diesem Fall eine Kugel, angeordnet ist,
Fig. 5 eine Querschnittsansicht der Verstellvorrichtung aus Fig. 1 gesehen von einer Richtung quer zur Verschubachse, wobei drei Rolllager dieser Richtung bzw. Seite zu erkennen sind, und wobei der Gleitkörper in einer Nullposition relativ zum Basiskörper angeordnet ist,
Fig. 6 eine Querschnittsansicht des Rolllagers aus Fig. 4 entlang der Verschubachse, wobei die Lagerschalen jeweils an in ihren gegenüberliegenden Enden entlang der Verschubachse Anschläge aufweisen, welche eingerichtet sind, den Rollkörper bzw. die Bewegung des Gleitkörpers entlang der Verschubachse zu begrenzen,
Fig. 7 die Verstellvorrichtung aus Fig. 5, wobei der Gleitkörper in einer maximalen Hubposition entlang der Verschubachse relativ zum Basiskörper angeordnet ist, wobei der Rollkörper der Rolllager zwischen den Anschlägen angeordnet ist,
Fig. 8 eine Querschnittsansicht des Rolllagers aus Fig. 6 entlang der Verschubachse, wobei die Lagerschalen jeweils an in ihren gegenüberliegenden Enden entlang der Verschubachse Anschläge aufweisen, welche eingerichtet sind, den Rollkörper bzw. die Bewegung des Gleitkörpers entlang der Verschubachse zu begrenzen, wobei sich der Gleitkörper in der maximalen Hubposition aus Fig. 7 befindet.

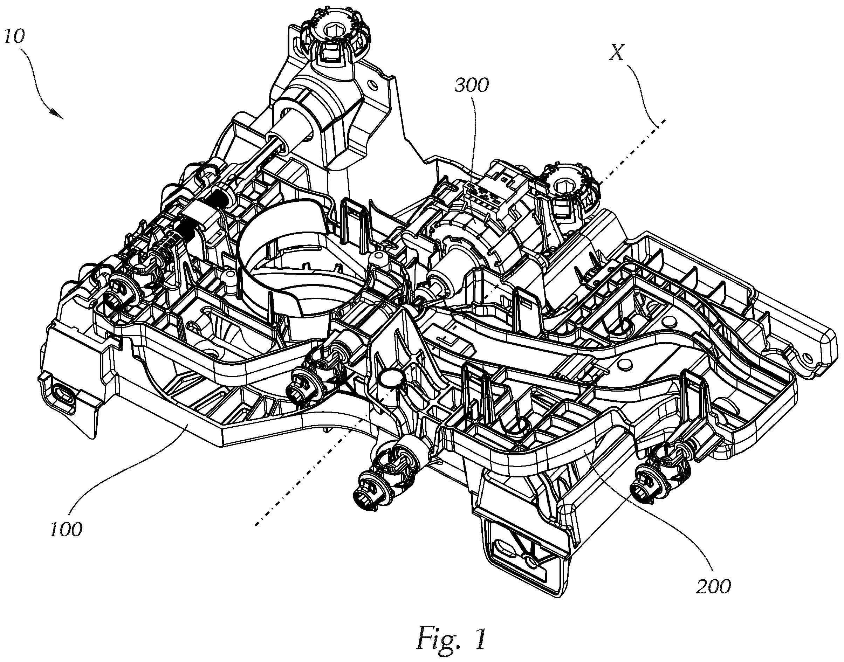

**Fig. 1** zeigt eine Verstellvorrichtung **10** für einen Kraftfahrzeugscheinwerfer zum Verstellen von zumindest einer optisch relevanten Baueinheit des Kraftfahrzeugscheinwerfers (nicht in den Figuren dargestellt), wobei die Verstellvorrichtung einen Basiskörper **100,** welcher in Bezug auf die zumindest eine zu verstellende optisch relevante Baueinheit feststehend angeordnet ist, und einen Gleitkörper **200** umfasst, welcher verschiebbar entlang einer Verschubachse **X** auf dem Basiskörper **100** gelagert ist und eingerichtet ist, an der zumindest einen optisch relevanten Baueinheit anzugreifen.

Ferner umfasst die Verstellvorrichtung eine Antriebseinrichtung **300,** welche in Bezug auf die zumindest eine zu verstellende optisch relevante Baueinheit feststehend angeordnet ist, vorzugsweise auf dem Basiskörper **100** angeordnet ist, und eingerichtet ist, an dem Gleitkörper **200** anzugreifen und diesen entlang der Verschubachse **X** zu verschieben, sodass bei einer Verschiebebewegung des Gleitkörpers **200** durch die Antriebseinrichtung **300** die zumindest eine optisch relevante Baueinheit bewegt wird.

Der Gleitkörper **200** ist mittels einer Führungseinrichtung an dem Basiskörper gelagert, wobei die Führungseinrichtung eingerichtet ist, den durch die Antriebseinrichtung **300** angetriebenen Gleitkörper **200** entlang der Verschubachse X auf dem Basiskörper **100** zu führen.

Die Führungseinrichtung umfasst in dem gezeigten Beispiel in den Figuren insgesamt sechs Rolllager **400,** wobei je drei Rolllager gegenüberliegend einer Achse quer zur Verschubachse **X** angeordnet sind, d.h. je Seite drei Rolllager, und wobei in je einem Rolllager **400** ein Rollkörper **410** gelagert ist.

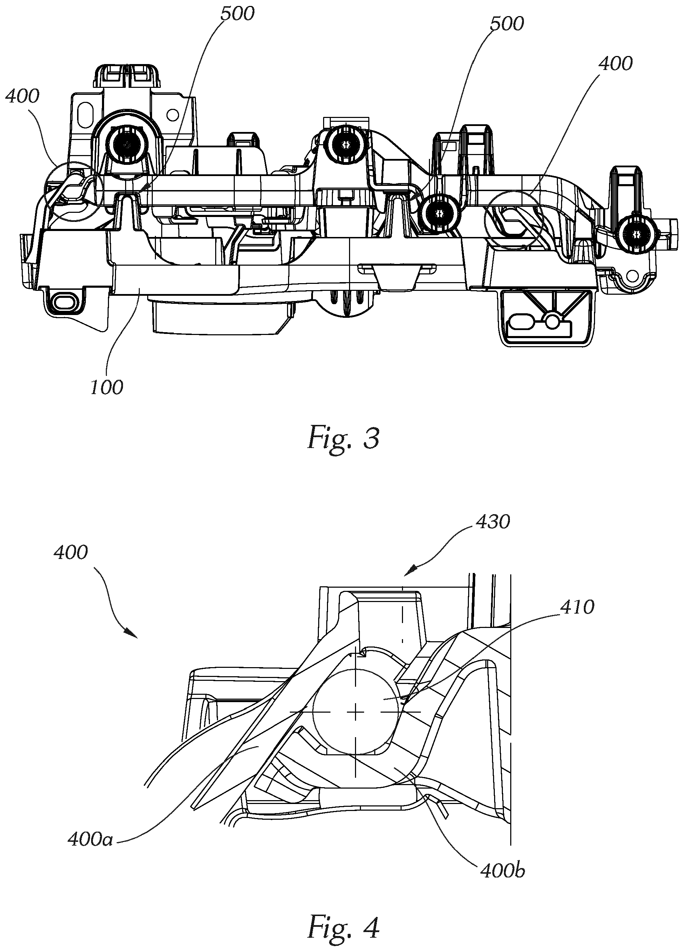

Wie beispielsweise in **Fig. 4****,** **6****,** **7** und **8** zu sehen ist, umfasst je ein Rolllager **400** eine erste und eine zweite Lagerschale **400a, 400b,** wobei die erste Lagerschale **400a** an dem Basiskörper **100** angeordnet ist und die zweite Lagerschale **400b** an dem Gleitkörper **200** angeordnet ist.

Durch Zusammenführen der beiden Lagerschalen **400a, 400b** bilden die erste und die zweite Lagerschale **400a, 400b** gemeinsam ein Rolllager **400,** wie in den Figuren zu sehen ist.

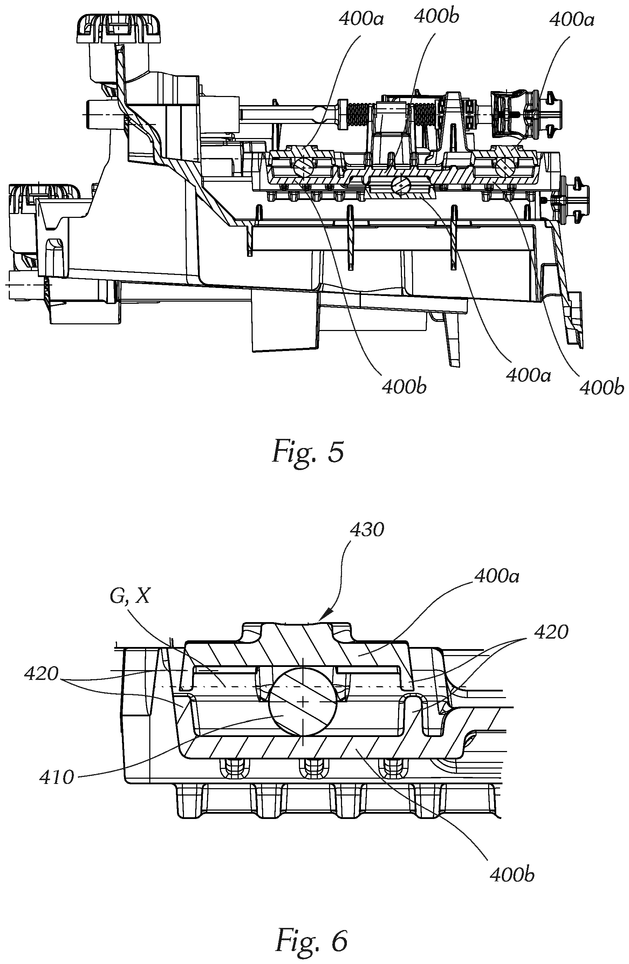

Im vorliegenden Beispiel in den Figuren sind je Seite quer zur Verschubachse X drei Rolllager **400** angeordnet, wobei bei den äußersten Rolllagern **400** je Seite (also jene, welche am weitesten von der Verschubachse **X** entfernt angeordnet sind) die jeweils zweite Lagerschale **400b** - gesehen in einem korrekt eingebauten Zustand der Verstelleinrichtung in einem Kraftfahrzeug - unten angeordnet ist. Beim übrigen Rolllager **400** je Seite ist die zweite Lagerschale **400b** oben angeordnet, wie auch insbesondere in **Fig. 5** dargestellt ist.

Der eine Rollkörper **410** ist dabei derart in einem Rolllager **400** gelagert, dass der eine Rollkörper **410** an der ersten und der zweiten Lagerschale **400a, 400b** anliegt (wie in **Fig. 4** zu sehen ist), sodass bei der Verschiebebewegung des Gleitkörpers **200** entlang der Verschubachse **X** die zweite Lagerschale **400b** eine Rollbewegung des zumindest einen Rollkörpers **410** bewirkt, wobei der zumindest eine Rollkörper **410** durch die Rollbewegung die zweite Lagerschale **400b** bei der Verschiebebewegung entlang der Verschubachse **X** gegen bzw. relativ zu der feststehenden ersten Lagerschale **400a** führt.

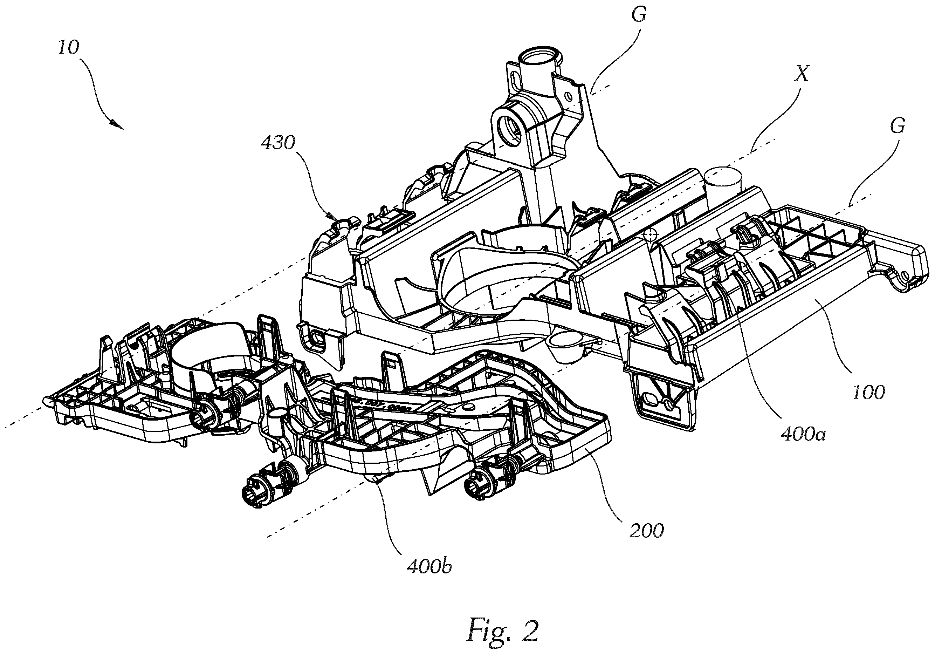

Die Rolllager **400** erstrecken sich entlang einer Geraden **G,** welche parallel zur Verschubachse **X** ist, wie in Fig. 2 und **Fig. 6** zu sehen ist.

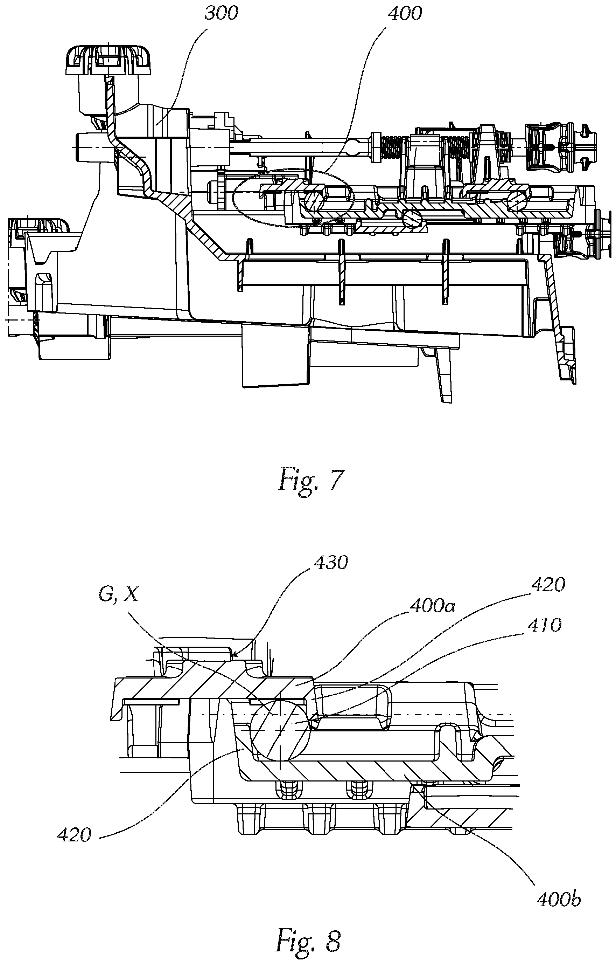

Wie in **Fig. 6** und **8** zu sehen ist, weisen die erste und zweite Lagerschale **400a, 400b** eines Rolllagers **400** jeweils zwei gegenüberliegende Anschläge **420** entlang der Verschubachse **X** auf, wobei bei einem Maximalhub und einem Minimalhub der Verschiebebewegung des Gleitkörpers **200** der Rollkörper **400** an einem Anschlag **420** der ersten Lagerschale **400a** und einem Anschlag **420** der zweiten Lagerschale **400b** anschlägt.

**Fig. 7** zeigt einen solchen Maximalhub entlang der Verschubachse **X** des Gleitkörpers **200** an dem Basiskörper **100,** wobei **Fig. 8** eine Detailansicht eines exemplarischen Rolllagers **400** des in dem Maximalhub befindlichen Gleitkörpers **200** zeigt. In **Fig. 8** ist deutlich zu erkennen, dass der Rollkörper des dargestellten Rolllagers **400** an einem Anschlag **420** der ersten Lagerschale **400a** und einem Anschlag **420** der zweiten Lagerschale **400b** anschlägt und so die Bewegung des Gleitkörpers **200** begrenzt.

In dem in den Figuren gezeigten Beispiel ist die erste Lagerschale **400a** der Rolllager **400** einstückig mit dem Basiskörper **100** hergestellt und die zweite Lagerschale **400b** der Rolllager **400** einstückig mit dem Gleitkörper **200** hergestellt.

Um den Rollkörper **410** in das entsprechende Rolllager **400** einzusetzen, weist die erste und/oder die zweite Lagerschale **400a, 400b** eine Montageöffnung **430** (nur jeweils eine Lagerschale eines Rolllagers weist eine Montageöffnung auf), über welche der Rollkörper **410** in das Rolllager **400** einsetzbar ist, wie beispielweise in **Fig. 6** zu sehen ist.

Ferner weist die zweite Lagerschale **400b** oder die erste Lagerschale **400a** eines Rolllagers **400** einen Verbindungsabschnitt auf, welcher derart elastisch ausgebildet ist, dass der Rollkörper **410,** welcher in dem Rolllager **400** angeordnet ist, durch eine Federkraft des Verbindungsabschnittes von der zweiten Lagerschale **400b** gegen die erste Lagerschale **400a** (oder umgekehrt) gedrückt wird. Vorzugsweise ist nur die zweite Lagerschale **400b** je Rolllager **400** derart elastisch ausgebildet.

Der Rollkörper **410** in den Rolllagern **400** ist rotationssymmetrisch um zumindest eine Achse, welche zumindest eine Achse orthogonal zur Verschubachse **X** ist, wobei in dem Beispiel in den Figuren der Rollkörper **410** als Kugel ausgebildet ist. Eine Ausführung als Zylinder und/oder Kegel ist ebenfalls denkbar.

Ferner kann der Rollkörper **410** bzw. die Rollkörper **410** aus Metall, vorzugsweise Stahl, oder auch aus Kunststoff hergestellt sein.

Zur weiteren Stützung des Gleitkörpers **200** auf dem Basiskörper **100** umfasst die Verstellvorrichtung **10** zusätzlich Stützeinrichtungen **500** zur Stützung des Gleitkörpers **200** auf dem Basiskörper **100** gegen eine Bewegung quer zur Verschubachse **X.**

Je eine Stützeinrichtung **500** ist als eine Feder-Nut-Verbindung zwischen dem Gleitkörper **200** und dem Basiskörper **100** ausgebildet, wie beispielsweise in **Fig. 2** zu sehen ist, wobei sich die Feder-Nut-Verbindung entlang der Verschubachse **X** erstreckt.

In dem gezeigten Beispiel ist die Nut auf dem Gleitkörper **200** angeordnet, wobei die Feder auf dem Basiskörper **100** angeordnet ist.

## Patentansprüche

1. Verstellvorrichtung (10) für einen Kraftfahrzeugscheinwerfer zum Verstellen von zumindest einer optisch relevanten Baueinheit des Kraftfahrzeugscheinwerfers, wobei die Verstellvorrichtung (10) Folgendes umfasst:
- einen Basiskörper (100), welcher in Bezug auf die zumindest eine zu verstellende optisch relevante Baueinheit feststehend angeordnet ist,
- einen Gleitkörper (200), welcher verschiebbar entlang einer Verschubachse (X) auf dem Basiskörper (100) gelagert ist und eingerichtet ist, an der zumindest einen optisch relevanten Baueinheit anzugreifen,
- eine Antriebseinrichtung (300), welche in Bezug auf die zumindest eine zu verstellende optisch relevante Baueinheit feststehend angeordnet ist, vorzugsweise auf dem Basiskörper (100) angeordnet ist, und eingerichtet ist, an dem Gleitkörper (200) anzugreifen und entlang der Verschubachse (X) zu verschieben, sodass bei einer Verschiebebewegung des Gleitkörpers (200) durch die Antriebseinrichtung (300) die zumindest eine optisch relevante Baueinheit bewegt wird,
wobei der Gleitkörper (200) mittels einer Führungseinrichtung an dem Basiskörper gelagert ist, wobei die Führungseinrichtung eingerichtet ist, den durch die Antriebseinrichtung (300) angetriebenen Gleitkörper (200) entlang der Verschubachse (X) auf dem Basiskörper (100) zu führen, wobei
die Führungseinrichtung zumindest ein Rolllager (400) umfasst, wobei in dem zumindest einen Rolllager (400) zumindest ein Rollkörper (410) gelagert ist, wobei der zumindest eine Rollkörper (410) derart in dem zumindest einen Rolllager (400) gelagert ist, dass der zumindest eine Rollkörper (410) bei der Verschiebebewegung des Gleitkörpers (200) entlang der Verschubachse (X) den Gleitkörper bei der Verschiebebewegung entlang der Verschubachse (X) relativ zu dem feststehenden Basiskörper (100) führt,
**dadurch gekennzeichnet, dass**
das zumindest eine Rolllager (400) eine erste und eine zweite Lagerschale (400a, 400b) umfasst, wobei die erste Lagerschale (400a) an dem Basiskörper (100) angeordnet ist und die zweite Lagerschale (400b) an dem Gleitkörper (200) angeordnet ist,
wobei die erste und die zweite Lagerschale (400a, 400b) durch Zusammenführen der beiden Lagerschalen (400a, 400b) gemeinsam das zumindest eine Rolllager (400) bilden,
und wobei der zumindest eine Rollkörper (410) derart in dem zumindest einen Rolllager (400) gelagert ist, dass der zumindest eine Rollkörper (410) an der ersten und der zweiten Lagerschale (400a, 400b) anliegt, sodass bei der Verschiebebewegung des Gleitkörpers (200) entlang der Verschubachse (X) die zweite Lagerschale (400b) eine Rollbewegung des zumindest einen Rollkörpers (410) bewirkt, wobei der zumindest eine Rollkörper (410) durch die Rollbewegung die zweite Lagerschale (400b) bei der Verschiebebewegung entlang der Verschubachse (X) relativ zu der feststehenden erste Lagerschale (400a) führt.

2. Verstellvorrichtung nach Anspruch 1, **dadurch gekennzeichnet, dass** das zumindest eine Rolllager (400) sich entlang einer Geraden (G) erstreckt, welche parallel zur Verschubachse (X) ist.

3. Verstellvorrichtung nach Anspruch 1 oder 2, **dadurch gekennzeichnet, dass** die erste und zweite Lagerschale (400a, 400b) jeweils zwei gegenüberliegende Anschläge (420) entlang der Verschubachse (X) aufweisen, wobei bei einem Maximalhub und einem Minimalhub der Verschiebebewegung des Gleitkörpers (200) der zumindest eine Rollkörper (410) an einem Anschlag (420) der ersten Lagerschale (400a) und einem Anschlag (420) der zweiten Lagerschale (400b) anschlägt.

4. Verstellvorrichtung nach einem der Ansprüche 1 bis 3, **dadurch gekennzeichnet, dass** die Führungseinrichtung zumindest zwei Rolllager (400) aufweist.

5. Verstellvorrichtung nach Anspruch 4, **dadurch gekennzeichnet, dass** die zumindest zwei Rolllager (400) gegenüberliegend einer Achse quer zur Verschubachse (X) angeordnet sind.

6. Verstellvorrichtung nach einem der Ansprüche 1 bis 5, **dadurch gekennzeichnet, dass** die erste Lagerschale (400a) einstückig mit dem Basiskörper (100) hergestellt ist und/oder die zweite Lagerschale (400b) einstückig mit dem Gleitkörper (200) hergestellt ist.

7. Verstellvorrichtung nach einem der Ansprüche 1 bis 6, **dadurch gekennzeichnet, dass** der zumindest eine Rollkörper (410) rotationssymmetrisch um zumindest eine Achse ist, welche zumindest eine Achse orthogonal zur Verschubachse (X) ist.

8. Verstellvorrichtung nach einem der Ansprüche 1 bis 7, **dadurch gekennzeichnet, dass** der zumindest eine Rollkörper (410) als Kugel, Zylinder und/oder Kegel ausgebildet ist.

9. Verstellvorrichtung nach einem der Ansprüche 1 bis 8, **dadurch gekennzeichnet, dass** die Verstellvorrichtung (10) zumindest eine Stützeinrichtung (500) zur Stützung des Gleitkörpers (200) auf dem Basiskörper (100) gegen eine Bewegung quer zur Verschubachse (X) aufweist.

10. Verstellvorrichtung nach Anspruch 9, **dadurch gekennzeichnet, dass** die zumindest eine Stützeinrichtung (500) als eine Feder-Nut-Verbindung zwischen dem Gleitkörper (200) und dem Basiskörper (100) ausgebildet ist, wobei sich die Feder-Nut-Verbindung entlang der Verschubachse (X) erstreckt.

11. Verstellvorrichtung nach Anspruch 10, **dadurch gekennzeichnet, dass** die Nut auf dem Gleitkörper (200) angeordnet ist, wobei die Feder auf dem Basiskörper (100) angeordnet ist.

12. Verstellvorrichtung nach einem der Ansprüche 1 bis 11, **dadurch gekennzeichnet, dass** der zumindest eine Rollkörper (410) über eine Montageöffnung (430), welche an der ersten oder der zweiten Lagerschale (400a, 400b) angeordnet ist, in das Rolllager (400) einsetzbar ist.

13. Verstellvorrichtung nach einem der Ansprüche 1 bis 12, **dadurch gekennzeichnet, dass** die zweite Lagerschale (400b) des zumindest einen Rolllagers (400) einen Verbindungsabschnitt aufweist, welcher derart elastisch ausgebildet ist, dass der zumindest eine Rollkörper (410), welcher in dem zumindest einen Rolllager (400) angeordnet ist, durch eine Federkraft des Verbindungsabschnittes von der zweiten Lagerschale (400b) gegen die erste Lagerschale (400a) gedrückt wird.

14. Kraftfahrzeugscheinwerfer mit zumindest einer Verstellvorrichtung gemäß einem der Ansprüche 1 bis 13.

## Claims

1. Adjusting device (10) for a motor vehicle headlamp for adjusting at least one optically relevant structural unit of the motor vehicle headlamp, the adjusting device (10) comprising the following:
- a base body (100) which is arranged in a fixed position with respect to the at least one optically relevant structural unit to be adjusted,
- a sliding body (200) which is mounted on the base body (100) so as to be displaceable along a displacement axis (X) and is designed to engage with the at least one optically relevant structural unit,
- a drive device (300), which is arranged in a fixed position in relation to the at least one optically relevant structural unit to be displaced, is preferably arranged on the base body (100), and is set up to engage on the sliding body (200) and to displace it along the displacement axis (X), so that the at least one optically relevant structural unit is moved during a displacement movement of the sliding body (200) by the drive device (300),
wherein the sliding body (200) is mounted on the base body by means of a guide device, wherein the guide device is arranged to guide the sliding body (200) driven by the drive device (300) along the displacement axis (X) on the base body (100), wherein
the guide device comprises at least one rolling bearing (400), at least one rolling body (410) being mounted in the at least one rolling bearing (400), the at least one rolling body (410) being mounted in the at least one rolling bearing (400) in such a way that, during the displacement movement of the sliding body (200) along the displacement axis (X), the at least one rolling body (410) guides the sliding body during the displacement movement along the displacement axis (X) relative to the stationary base body (100),
**characterized in that**
the at least one rolling bearing (400) comprises a first and a second bearing shell (400a, 400b), wherein the first bearing shell (400a) is arranged on the base body (100) and the second bearing shell (400b) is arranged on the sliding body (200),
wherein the first and second bearing shells (400a, 400b) jointly form the at least one rolling bearing (400) by bringing the two bearing shells (400a, 400b) together,
and wherein the at least one rolling body (410) is mounted in the at least one rolling bearing (400) in such a way that the at least one rolling body (410) bears against the first and second bearing shells (400a, 400b), so that during the displacement movement of the sliding body (200) along the displacement axis (X) the second bearing shell (400b) causes a rolling movement of the at least one rolling body (410), wherein the at least one rolling body (410) guides the second bearing shell (400b) relative to the stationary first bearing shell (400a) during the displacement movement along the displacement axis (X) by the rolling movement.

2. Adjusting device according to claim 1, **characterized in that** the at least one roller bearing (400) extends along a straight line (G) which is parallel to the displacement axis (X).

3. Adjusting device according to claim 1 or 2, **characterized in that** the first and second bearing shells (400a, 400b) each have two opposing stops (420) along the displacement axis (X), the at least one rolling body (410) abutting against a stop (420) of the first bearing shell (400a) and a stop (420) of the second bearing shell (400b) during a maximum stroke and a minimum stroke of the displacement movement of the sliding body (200).

4. Adjusting device according to one of claims 1 to 3, **characterized in that** the guide device has at least two rolling bearings (400).

5. Adjusting device according to claim 4, **characterized in that** the at least two roller bearings (400) are arranged opposite an axis transverse to the displacement axis (X).

6. Adjusting device according to one of claims 1 to 5, **characterized in that** the first bearing shell (400a) is produced in one piece with the base body (100) and/or the second bearing shell (400b) is produced in one piece with the sliding body (200).

7. Adjusting device according to one of claims 1 to 6, **characterized in that** the at least one rolling body (410) is rotationally symmetrical about at least one axis, which at least one axis is orthogonal to the displacement axis (X).

8. Adjusting device according to one of claims 1 to 7, **characterized in that** the at least one rolling body (410) is designed as a ball, cylinder and/or cone.

9. Adjusting device according to one of claims 1 to 8, **characterized in that** the adjusting device (10) has at least one supporting device (500) for supporting the sliding body (200) on the base body (100) against a movement transverse to the displacement axis (X).

10. Adjusting device according to claim 9, **characterized in that** the at least one supporting device (500) is designed as a tongue-and-groove connection between the sliding body (200) and the base body (100), the tongue-and-groove connection extending along the displacement axis (X).

11. Adjusting device according to claim 10, **characterized in that** the groove is arranged on the sliding body (200), the tongue being arranged on the base body (100).

12. Adjusting device according to one of claims 1 to 11, **characterized in that** the at least one rolling body (410) can be inserted into the rolling bearing (400) via a mounting opening (430), which is arranged on the first or the second bearing shell (400a, 400b).

13. Adjusting device according to one of claims 1 to 12, **characterized in that** the second bearing shell (400b) of the at least one rolling bearing (400) has a connecting section which is designed elastically in such a way that the at least one rolling body (410), which is arranged in the at least one rolling bearing (400), is pressed by the second bearing shell (400b) against the first bearing shell (400a) by a spring force of the connecting section.

14. Motor vehicle headlamp with at least one adjusting device according to one of claims 1 to 13.

## Revendications

1. Un dispositif de réglage (10) pour un projecteur de véhicule automobile, destiné à régler au moins un ensemble optiquement pertinent du projecteur de véhicule automobile, le dispositif de réglage (10) comprenant :
- un corps de base (100), qui est disposé de manière fixe par rapport à l'au moins un module optiquement pertinent à régler,
- un corps coulissant (200) qui est monté de manière à pouvoir se déplacer le long d'un axe de déplacement (X) sur le corps de base (100) et qui est conçu pour s'engager avec la au moins une unité de construction optiquement pertinente,
- un dispositif d'entraînement (300), qui est disposé de manière fixe par rapport à l'au moins un composant optiquement pertinent à régler, de préférence disposé sur le corps de base (100), et qui est conçu pour s'engager sur le corps coulissant (200) et le déplacer le long de l'axe de déplacement (X), de sorte que lors d'un mouvement de déplacement du corps coulissant (200) par le dispositif d'entraînement (300), l'au moins un composant optiquement pertinent est déplacé,
le corps coulissant (200) étant monté sur le corps de base au moyen d'un dispositif de guidage, le dispositif de guidage étant conçu pour guider le corps coulissant (200) entraîné par le dispositif d'entraînement (300) le long de l'axe de déplacement (X) sur le corps de base (100), où
le dispositif de guidage comprend au moins un palier à roulement (400), au moins un corps de roulement (410) étant logé dans l'au moins un palier à roulement (400), l'au moins un corps de roulement (410) étant logé dans l'au moins un palier à roulement (400) de telle sorte que l'au moins un corps de roulement (410), lors du mouvement de coulissement du corps coulissant (200) le long de l'axe de coulissement (X), guide le corps coulissant lors du mouvement de coulissement le long de l'axe de coulissement (X) par rapport au corps de base fixe (100),
**caractérisé en ce que**
le au moins un palier à roulement (400) comprend une première et une deuxième coquille de coussinet (400a, 400b), la première coquille de coussinet (400a) étant disposée sur le corps de base (100) et la deuxième coquille de coussinet (400b) étant disposée sur le corps coulissant (200),
la première et la deuxième coquille de coussinet (400a, 400b) formant ensemble le au moins un palier à roulement (400) en réunissant les deux coquilles de coussinet (400a, 400b),
et l'au moins un corps de roulement (410) étant logé dans l'au moins un palier de roulement (400) de telle sorte que l'au moins un corps de roulement (410) s'appuie sur la première et la deuxième coquille de coussinet (400a, 400b), de sorte que lors du mouvement de coulissement du corps coulissant (200) le long de l'axe de coulissement (X), la deuxième coquille de coussinet (400b) provoque un mouvement de roulement de l'au moins un corps de roulement (410), l'au moins un corps de roulement (410) guidant, par le mouvement de roulement, la deuxième coquille de coussinet (400b) lors du mouvement de translation le long de l'axe de translation (X) par rapport à la première coquille de coussinet (400a) fixe.

2. Dispositif de réglage selon la revendication 1, **caractérisé en ce que** ledit au moins un palier à roulement (400) s'étend le long d'une droite (G) qui est parallèle à l'axe de déplacement (X).

3. Dispositif de réglage selon la revendication 1 ou 2, **caractérisé en ce que** la première et la deuxième coquille de coussinet (400a, 400b) présentent chacune deux butées (420) opposées le long de l'axe de déplacement (X), l'au moins un corps de roulement (410) venant buter contre une butée (420) de la première coquille de coussinet (400a) et une butée (420) de la deuxième coquille de coussinet (400b) pour une course maximale et une course minimale du mouvement de déplacement du corps coulissant (200).

4. Dispositif de réglage selon l'une des revendications 1 à 3, **caractérisé en ce que** le dispositif de guidage comporte au moins deux paliers de roulement (400).

5. Dispositif de réglage selon la revendication 4, **caractérisé en ce que** les au moins deux paliers à rouleaux (400) sont disposés en face d'un axe transversal à l'axe de déplacement (X).

6. Dispositif de réglage selon l'une des revendications 1 à 5, **caractérisé en ce que** la première coquille de coussinet (400a) est réalisée d'une seule pièce avec le corps de base (100) et/ou la deuxième coquille de coussinet (400b) est réalisée d'une seule pièce avec le corps coulissant (200).

7. Dispositif de réglage selon l'une des revendications 1 à 6, **caractérisé en ce que** ledit au moins un corps de roulement (410) est symétrique en rotation autour d'au moins un axe, ledit au moins un axe étant orthogonal à l'axe de déplacement (X).

8. Dispositif de réglage selon l'une des revendications 1 à 7, **caractérisé en ce que** ledit au moins un corps de roulement (410) est réalisé sous forme de sphère, de cylindre et/ou de cône.

9. Dispositif de réglage selon l'une des revendications 1 à 8, **caractérisé en ce que** le dispositif de réglage (10) comporte au moins un dispositif d'appui (500) pour soutenir le corps coulissant (200) sur le corps de base (100) contre un mouvement transversal à l'axe de déplacement (X).

10. Dispositif de réglage selon la revendication 9, **caractérisé en ce que** le au moins un dispositif d'appui (500) est conçu comme une liaison à ressort et rainure entre le corps coulissant (200) et le corps de base (100), la liaison à ressort et rainure s'étendant le long de l'axe de déplacement (X).

11. Dispositif de réglage selon la revendication 10, **caractérisé en ce que** la rainure est disposée sur le corps coulissant (200), le ressort étant disposé sur le corps de base (100).

12. Dispositif de réglage selon l'une des revendications 1 à 11, **caractérisé en ce que** l'au moins un corps de roulement (410) peut être inséré dans le palier à roulement (400) par l'intermédiaire d'une ouverture de montage (430) qui est disposée sur la première ou la deuxième coquille de coussinet (400a, 400b).

13. Dispositif de réglage selon l'une des revendications 1 à 12, **caractérisé en ce que** la deuxième coque de palier (400b) de l'au moins un palier à roulement (400) présente une section de liaison qui est réalisée de manière élastique de telle sorte que l'au moins un corps de roulement (410) qui est disposé dans l'au moins un palier à roulement (400) est pressé contre la première coque de palier (400a) par une force élastique de la section de liaison de la deuxième coque de palier (400b).

14. Projecteur de véhicule automobile comportant au moins un dispositif de réglage selon l'une quelconque des revendications 1 à 13.
